# DEMANDE DE BREVET EUROPEEN

(11) **EP 1 377 104 A1**
(43) Date de publication de la demande: **02.01.2004**
(21) Numéro de dépôt: 03291440.0
(22) Date de dépôt: 16.06.2003
(51) Int. Cl.: H04Q 7/38

(54) **Système de télécommunication mobile avec une gestion ameliorée de macro-cellules**

(30) Priorité: 20.06.2002 FR 0207760
(71) Demandeur: FRANCE TELECOM SA, 75015 Paris (FR)
(72) Inventeur: Quinquis, Jean-Paul, 22700 Perros-Guirec (FR); Roussel, Olivier, 22700 Perros-Guirec (FR); Cochennec, Jean-Yves, 22560 Trebeurden (FR)
(74) Mandataire: Maillet, Alain

(57) **Abrégé**

La présente invention concerne un procédé de transmission de données entre au moins un émetteur/récepteur mobile EU et un réseau de communication incluant une pluralité de stations 10, 11,...19 pilotées par au moins un dispositif de contrôle RNC1, une station active 16 étant reliée au dispositif de contrôle RNC1 par une branche de communication principale, et associée à des stations voisines 12, 13, 15, 19, reliées au dispositif de contrôle RNC1 au moyen de branches de communication secondaires, de façon à former une macro-cellule munie d'une zone de couverture incluant en toutes circonstances l'émetteur/récepteur mobile EU.

Le procédé selon l'invention inclut une étape de mesure d'une durée d'existence de chaque branche de communication secondaire.

L'invention permet d'identifier et de libérer des branches de communication secondaires inutilisées, au bénéfice d'autres émetteurs/récepteurs mobiles.

## Description

La présente invention concerne un procédé de transmission de données entre au moins un émetteur/récepteur mobile et un réseau de communication incluant une pluralité de stations de base pilotées par au moins un dispositif de contrôle, une station de base avec laquelle l'émetteur/récepteur mobile est en communication à un instant donné étant dite active et reliée au dispositif de contrôle par une branche de communication dite principale, et associée à au moins une station de base voisine de ladite station active au moyen d'au moins une branche de communication secondaire, connexe à la branche de communication principale et destinée à relier ladite station voisine au dispositif de contrôle, de façon à former une macro-cellule munie d'une zone de couverture incluant l'émetteur/récepteur mobile et d'une position apte à varier avec la position dudit émetteur/récepteur mobile.

Un tel procédé est connu du brevet européen No. 0 805 611 B1. Ce document décrit un procédé et un système de télécommunication dans lesquels une branche de communication secondaire est constituée en réservant un canal de communication pour une éventuelle communication entre la station de base considérée et un émetteur/récepteur, sans pour autant que ledit canal ne soit effectivement utilisé pour assurer un tel transfert de données, la branche de communication principale étant constituée par un canal qui est effectivement utilisé pour assurer un transfert de données entre l'émetteur/récepteur mobile et la station de base active. L'établissement de chaque branche secondaire provoque donc un blocage d'une partie des ressources du système de télécommunication en rendant indisponible un canal de communication qui pourrait sinon être effectivement utilisé pour réaliser un transfert de données entre la station de base considérée et un autre émetteur/récepteur mobile.

Ainsi, bien que la mise en oeuvre de macro-cellules selon le procédé connu favorise une continuité d'une communication entretenue par un utilisateur d'un émetteur/récepteur mobile lorsqu'il se déplace depuis la zone de couverture d'une cellule active vers la zone de couverture d'une cellule voisine, lesquelles cellules sont incluses dans une même macro-cellule selon le procédé connu, et assure ainsi à cet utilisateur une qualité de service remarquable, cette qualité de service ne peut être obtenue qu'en limitant le nombre total d'émetteurs/récepteurs mobiles opérationnels dans la zone géographique considérée.

L'un des buts de l'invention est de permettre d'augmenter le nombre d'émetteurs/récepteurs potentiellement aptes à bénéficier de la qualité de service offerte par le procédé et le système de télécommunication connus, en rendant possible une identification en vue d'une élimination totale ou partielle de macro-cellules qui ne contribuent pas de manière significative à une amélioration de la qualité du service fourni aux utilisateurs d'émetteurs/récepteurs connectés aux stations de base actives de ces macro-cellules par des branches de communication principales.

En effet, un procédé de transmission de données conforme au paragraphe introductif est caractérisé selon l'invention en ce qu'il inclut une étape de mesure d'une durée d'existence de chaque branche de communication secondaire.

L'invention permet une identification et, par conséquent, une élimination de branches de communication secondaires inutilisées, afin de libérer les ressources associées à ces branches au bénéfice d'autres émetteurs/récepteurs mobiles.

Selon une première variante de l'invention, un procédé tel celui décrit ci-dessus inclut en outre une étape de comparaison de la durée d'existence de chaque branche de communication secondaire avec au moins une durée prédéterminée, et une étape de suppression de chaque branche de communication secondaire dont la durée d'existence est supérieure à ladite durée prédéterminée.

Cette première variante permet d'identifier de manière systématique toutes les branches de communication secondaires qui seront restées inutilisées, puisque non transformées en branches de communication principales, pendant suffisamment longtemps pour qu'elles puissent être considérées comme non-significatives et conséquemment supprimées.

Selon une deuxième variante de l'invention, un procédé tel celui décrit plus haut inclut en outre une étape de comparaison entre elles des durées d'existence des branches de communication secondaires, mise en oeuvre en présence d'une pluralité de telles branches, et une étape de suppression d'un nombre N des branches de communication secondaires qui présentent les plus longues durées d'existence.

Cette deuxième variante permet de sélectionner les plus anciennes des branches de communication secondaires qui seront restées inutilisées, puisque non transformées en branches de communication principales, et de ne supprimer que ces seules branches afin de laisser subsister les branches de communication secondaires les plus récentes, qui sont liées à des stations de base théoriquement plus proches de l'émetteur/récepteur mobile dont la macro-cellule correspondante suit le déplacement, et donc plus susceptibles de devoir servir de station active pour ledit émetteur/récepteur mobile.

Selon un mode de mise en oeuvre particulier de cette deuxième variante, le nombre N est égal à un nombre de nouvelles branches de communication qui doivent être établies et qui impliquent des stations de base appartenant à la macro-cellule considérée.

Ce mode de mise en oeuvre particulier permet d'optimiser la gestion des ressources du système en prévoyant de ne supprimer que des branches secondaires dont la libération profitera directement à d'autres utilisateurs du système, alors qu'une suppression systématique de branches de communication secondaires jugées trop anciennes libérera des ressources qui pourront dans un premier temps ne pas être réutilisées, et créera donc un risque minime de dégradation de la qualité de service offerte à l'utilisateur de l'émetteur/récepteur mobile auquel est attribuée la macro-cellule considérée, sans pour autant que ce risque ne soit compensé par une amélioration immédiate de la qualité de service offerte aux utilisateurs d'autres émetteurs/récepteurs mobiles.

Selon un mode de mise en oeuvre particulier de l'invention, tout établissement d'une branche de communication secondaire est en outre subordonné à la réalisation préalable d'une condition par un utilisateur de l'émetteur/récepteur mobile.

Ce mode de mise en oeuvre particulier de l'invention permet de limiter aux seuls utilisateurs en ayant fait la demande auprès d'un opérateur du système de télécommunication le nombre d'utilisateurs d'émetteurs/récepteurs mobiles pour lesquels des macro-cellules doivent être mises en place, les autres utilisateurs se voyant uniquement attribuer des branches de communication principales sans branches de communication secondaires connexes, ce qui permet de limiter le volume de ressources qui, bien que rendues indisponibles du fait de l'établissement et du maintien de macro-cellules, ne seraient pour autant pas effectivement utilisées.

Selon un autre mode de mise en oeuvre particulier de l'invention, toute opération d'établissement ou de suppression d'une branche de communication principale ou secondaire est exécutée à l'instigation du dispositif de contrôle.

Cet autre mode de mise en oeuvre particulier de l'invention permet une gestion centralisée par le dispositif de contrôle de l'établissement et du maintien des macro-cellules, et évite donc de recourir à des communications entre les stations de base pour effectuer une telle gestion, ce qui permet de réduire le volume de communications en cours au sein du système de télécommunication et d'optimiser ainsi encore plus la gestion des ressources dudit système.

Les opérations d'établissement ou de suppression de branches de communication principales et/ou secondaires seront de préférence déclenchées en fonction d'informations relatives au déplacement de l'émetteur/récepteur mobile fournies au dispositif de contrôle par au moins une station de base de la macro-cellule.

Dans un autre mode de mise en oeuvre particulier de l'invention, le réseau de communication pourra inclure une pluralité de dispositifs de contrôle, chacun destiné à piloter un groupe prédéterminé de stations de base, la branche de communication principale étant établie entre la station de base active et un dispositif de contrôle actif destiné à piloter le groupe de stations de base auquel appartient ladite station de base active, des stations de base qui seraient associées à la station de base active et qui seraient pilotées par d'autres dispositifs de contrôle étant alors reliées par des branches de communication secondaires auxdits dispositifs, eux-mêmes reliés au dispositif de contrôle actif par d'autres branches de communication secondaires.

Ce mode de mise en oeuvre permet un déploiement d'un réseau de communication à grande échelle, comprenant par exemple plusieurs centaines de stations de base, et une multiplicité de dispositifs de contrôle dont chacun assurera une gestion centralisée de macro-cellules comprenant une station de base active dépendante du dispositif de contrôle considéré, et évite donc une saturation qui risquerait de survenir si la gestion de l'ensemble des macro-cellules était réalisée par un dispositif de contrôle unique.

Le procédé selon l'invention pourra en outre avantageusement inclure, dans le but de simplifier encore une gestion centralisée par le dispositif de contrôle de l'établissement et du maintien des macro-cellules, une étape d'interrogation par le dispositif de contrôle pilotant la station de base active d'une table de macro-cellules préalablement mémorisée, destinée à contenir, pour chaque station de base pilotée par ledit dispositif, une liste des stations de base qui devront être associées à la station de base considérée lorsque ladite station de base sera active afin de former une macro-cellule.

L'invention concerne en outre, dans l'une de ses applications, un système de télécommunication comprenant au moins un émetteur/récepteur mobile et un réseau de communication incluant une pluralité de stations de base pilotées par au moins un dispositif de contrôle, une station de base avec laquelle l'émetteur/récepteur mobile est en communication à un instant donné étant dite active et reliée au dispositif de contrôle par une branche de communication dite principale, et associée à au moins une station de base voisine de ladite station active au moyen d'au moins une branche de communication secondaire, connexe à la branche de communication principale et destinée à relier ladite station voisine au dispositif de contrôle, de façon à former une macro-cellule munie d'une zone de couverture incluant l'émetteur/récepteur mobile et d'une position apte à varier avec la position dudit émetteur/récepteur mobile,
système dans lequel le dispositif de contrôle est muni de moyens de mesure d'une durée d'existence de chaque branche de communication secondaire.

Dans l'un de ses modes de réalisation possibles, un tel système comprendra en outre des moyens de comparaison de la durée d'existence de chaque branche de communication secondaire avec au moins une durée prédéterminée, les moyens de comparaison étant destinés à déclencher une suppression de chaque branche de communication secondaire dont la durée d'existence est supérieure à ladite durée prédéterminée.

Dans un autre mode de réalisation possible, le système décrit plus haut pourra en outre inclure des moyens de comparaison entre elles des durées d'existence des branches de communication secondaires, destinés à n'être activés qu'en présence d'une pluralité de telles branches, et à déclencher une suppression d'un nombre N des branches de communication secondaires qui présentent les plus longues durées d'existence.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une représentation schématique d'un système de télécommunication conforme à l'invention dans une première et une deuxième configurations,
La Fig.2 est une autre représentation schématique d'un tel système dans une troisième configuration,
La Fig.3 est un schéma bloc représentatif de liaisons établies dans un tel système dans ladite première configuration,
La Fig.4 est un schéma bloc représentatif de liaisons établies dans un tel système dans ladite deuxième configuration,
La Fig.5 est un schéma bloc représentatif de liaisons établies dans un tel système dans ladite troisième configuration, et
La Fig.6 est un schéma fonctionnel décrivant partiellement un dispositif de contrôle inclus dans un mode de réalisation particulier d'un tel système.

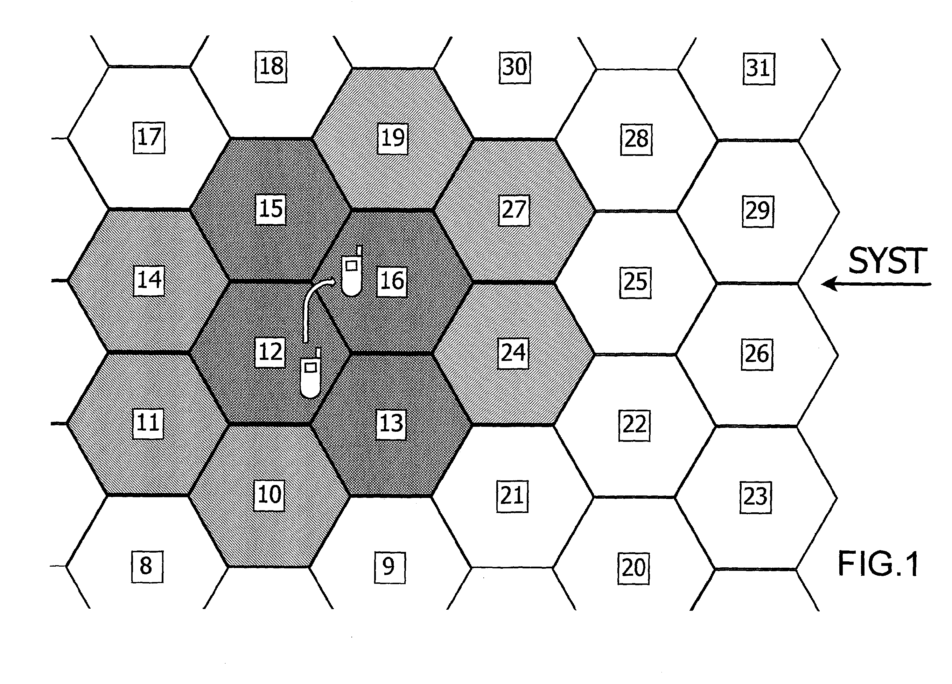

La Fig. 1 représente schématiquement un système de télécommunication SYST dans lequel l'invention est mise en oeuvre. Ce système comprend un réseau de communication incluant une pluralité de stations de base 8, 9, 10, 11... 19, 20, 21...29, 30, 31, chacune présentant une zone de couverture communément appelée cellule et représentée dans cet exemple sous la forme d'un hexagone au centre duquel est placée la station de base correspondante. Les formes régulières qui sont ici attribuées aux cellules sont hautement théoriques et destinées à faciliter la compréhension de l'exposé, car en règle générale, les cellules ont des contours irréguliers et très divers.

Dans une première configuration de ce système SYST, un émetteur/récepteur mobile se trouve dans la zone de couverture de la station de base 12, et communique avec celle-ci, de sorte que dans cette première configuration, la station de base 12 est dite active. La station de base 12 est alors reliée à un dispositif de contrôle, destiné à piloter un groupe de stations de base auquel appartient ladite station de base 12 et non représenté sur la présente figure, par une branche de communication dite principale.

Une telle branche de communication principale sera par exemple établie conformément aux dispositions de la norme 3GPP 25.931 et pourra être identifiée par des étiquettes VPI et VCI conformes au protocole ATM et par une étiquette CID conforme au protocole AAL2.

Afin de rendre plus rapide l'établissement ultérieur d'une nouvelle branche de communication principale entre une autre station de base et le dispositif de contrôle, établissement qui sera requis si l'émetteur/récepteur mobile change de cellule, au moins une station de base, voisine de la station de base active, est associée à ladite station active au moyen d'au moins une branche de communication secondaire, connexe à la branche de communication principale et destinée à relier ladite station voisine au dispositif de contrôle. Une telle branche de communication secondaire sera semblable à une branche de communication principale, et donc identifiée au moyen d'étiquettes VPI, VCI et CED, pour reprendre l'exemple précédent. Chaque branche de communication secondaire est en quelque sorte une branche de communication principale qui ne réalise aucun transfert de données. Sa transformation en branche de communication principale sera donc très rapide, puisque, son existence étant préétablie, il suffira d'y aiguiller les données qui transitaient auparavant par une autre branche de communication principale qui reliait la station de base précédemment active, voisine de la station de base considérée, au dispositif de contrôle.

L'union de la cellule de la station active, d'une part, et de la ou des cellules de la ou des stations de base voisines, d'autre part, forme ainsi une macro-cellule munie d'une zone de couverture incluant l'émetteur/récepteur mobile et d'une position apte à varier avec la position dudit émetteur/récepteur mobile.

Les macro-cellules peuvent inclure un nombre variable dans le temps et dans l'espace de cellules élémentaires, et également présenter des formes diverses en fonction des critères retenus pour sélectionner les cellules voisines. Si, par exemple, le système de télécommunication est destiné à être déployé le long d'une voie de circulation unidirectionnelle, comme une autoroute ou une voie ferrée, les déplacements de l'émetteur/récepteur mobile sont prévisibles en tant que devant en principe se produire selon la direction de la voie de circulation. Une fois le sens de déplacement établi, on pourra n'associer à la station de base active qu'une seule station de base voisine dont la zone de couverture est immédiatement adjacente à celle de la station de base active selon la direction de la voie de circulation. Dans d'autres cas, tel celui représenté ici, les déplacements de l'émetteur/récepteur mobile seront *a priori* imprévisibles, et il sera préférable, afin d'assurer la meilleure qualité de service en rendant les changements de station active aussi rapides que possibles, d'associer à chaque station active une pluralité de stations voisines dont les zones de couverture entourent celle de la station active. Dans la première configuration, la station active 12 est ainsi associée à des stations voisines 10, 11, 13, 14, 15 et 16.

Dans une deuxième configuration du système SYST, l'émetteur/récepteur mobile a quitté la zone de couverture de la station active 12 pour entrer dans celle de sa station voisine 16. La branche de communication secondaire qui reliait la station 16 au dispositif de contrôle est alors transformée en branche de communication principale, ce qui est exécuté par le dispositif de contrôle qui aiguille sur ladite branche de communication les données qui étaient jusqu'alors destinées à la précédente branche de communication principale reliant le dispositif de contrôle à la station de base 12. La station de base 16 devient ainsi la nouvelle station active, à laquelle doivent être associées des stations de base voisines, dont certaines faisaient déjà partie de la macro-cellule précédemment décrite dans la première configuration du système, en l'occurrence les stations 13 et 15, dont les branches de communication secondaires qui les relient au dispositif de contrôle sont maintenues en existence. La station de base précédemment active 12 est reliée dans cette deuxième configuration audit dispositif de contrôle par une nouvelle branche de communication secondaire, et de nouvelles stations 19, 24 et 27, voisines de la nouvelle station active 16 sont associées à ladite station 16 au moyen de nouvelles branches de communication secondaires. Les branches de communication secondaires qui caractérisaient l'appartenance des autres stations de base 10, 11 et 14 à la macro-cellule décrite dans le cadre dans la première configuration sont supprimées dans cette deuxième configuration, de sorte que ces stations de base deviennent disponibles pour entretenir d'autres communications avec d'autres émetteurs/récepteurs mobiles via de nouvelles branches de communication principales, ou pour établir de nouvelles branches de communication secondaires au sein d'autres macro-cellules incluant de tels autres émetteurs/récepteurs mobiles.

On observe ainsi que l'émetteur/récepteur mobile est accompagné dans ses déplacements par une macro-cellule bâtie autour de la zone de couverture de la station de base active avec laquelle ledit émetteur/récepteur est en communication et incluant ladite zone de couverture, de sorte qu'à tout instant, un déplacement dudit émetteur/récepteur mobile vers une nouvelle zone de couverture ne nécessite qu'une activation d'une branche de communication secondaire, c'est-à-dire une transformation de ladite branche en branche de communication principale, pour préserver une continuité de la communication en cours, et assurer ainsi une remarquable qualité de service, une reconfiguration de la macro-cellule pouvant ensuite être effectuée par création et suppression de nouvelles et d'anciennes branches de communication secondaires, respectivement. Dans certains modes de mise en oeuvre de l'invention, deux branches de communication principales liées à une même communication pourront coexister pendant une période de transition au cours de laquelle la macro-cellule sera effectivement reconfigurée. On pourra en outre prévoir de répartir dans le temps la création des nouvelles branches de communication secondaires, afin d'étaler dans le temps une charge de calcul nécessaire au système pour réaliser l'établissement de ces branches.

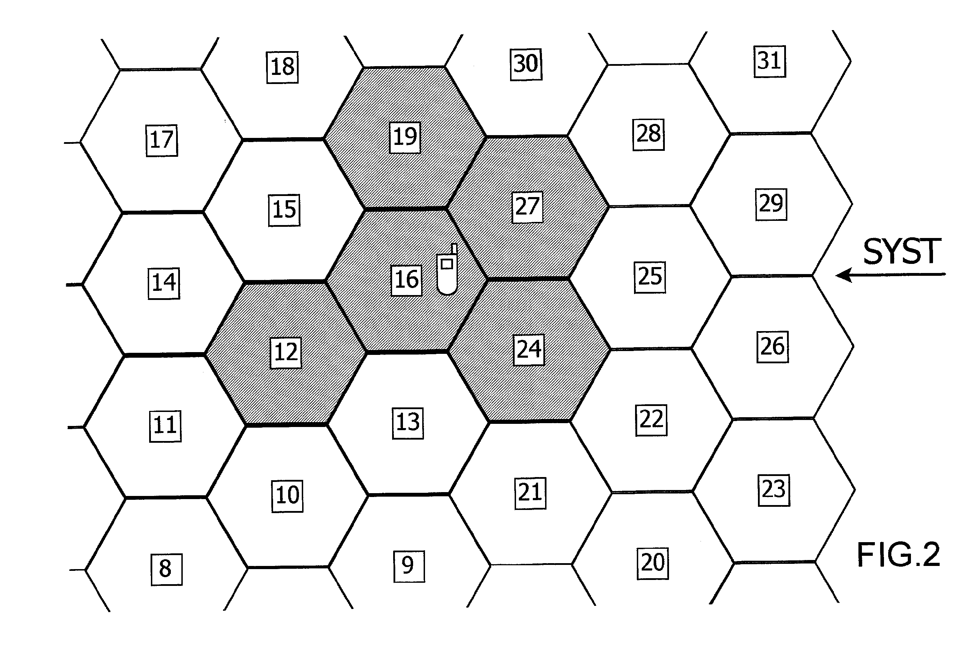

La Fig.2 représente le système SYST dans une troisième configuration, qui permet d'observer les avantages obtenus grâce à l'invention. Dans cette troisième configuration, l'émetteur/récepteur mobile se trouve toujours dans la zone de couverture de la station de base 16, ce qui signifie que l'identité de la station de base active n'a pas changé pendant un intervalle de temps significatif. L'invention, en rendant possible une mesure des durées d'existence des branches de communication secondaires liant les stations de base voisines de la station de base active au dispositif de contrôle de ladite station active, a permis de déterminer que les branches secondaires attribuées aux stations 13 et 15 et établies initialement pour réaliser la macro-cellule dans la première configuration du système, sont restées inutilisées depuis.

Selon des première ou deuxième variantes de l'invention, une telle identification aura pu être réalisée en comparant les durées d'existence des dites branches de communication secondaires à une durée de référence prédéterminée, ou en comparant entre elles toutes les durées d'existence de l'ensemble des branches de communication secondaires mises en oeuvre dans la macro-cellule et en ne retenant aux fins d'identification que les N branches secondaires présentant les plus grandes durées d'existence (avec N=2 dans cette troisième configuration).

Le dispositif de contrôle aura alors supprimé les branches de communication secondaires ainsi identifiées, de sorte que les stations de base 13 et 15 correspondantes sont devenues disponibles pour entretenir d'autres communications avec d'autres émetteurs/récepteurs mobiles via de nouvelles branches de communication principales, ou pour établir de nouvelles branches de communication secondaires au sein d'autres macro-cellules incluant de tels autres émetteurs/récepteurs mobiles.

Selon un mode de mise en oeuvre particulier de la deuxième variante évoquée ci-dessus, on pourra choisir de ne supprimer que les branches de communication secondaires dont la libération est effectivement nécessaire pour établir de nouvelles branches de communication qui impliquent des stations de base appartenant à la macro-cellule considérée, par exemple une nouvelle branche de communication requise par un autre émetteur/récepteur. Ainsi, si le dispositif de contrôle n'a reçu qu'une seule requête en ce sens, N sera considéré égal à 1 et une seule des deux branches secondaires liant les stations 13 et 15 au dispositif de contrôle sera supprimée. Ceci permet d'optimiser la gestion des ressources du système en prévoyant de ne supprimer que des branches secondaires dont la libération profitera directement à d'autres utilisateurs du système.

Dans un mode de mise en oeuvre particulier de l'invention, toute opération d'établissement ou de suppression d'une branche principale ou secondaire est exécutée à l'instigation du dispositif de contrôle. Les opérations d'établissement ou de suppression des branches de communication principales et/ou secondaires seront de préférence déclenchées en fonction d'informations relatives au déplacement de l'émetteur/récepteur mobile fournies au dispositif de contrôle par au moins une station de base de la macro-cellule.

Ainsi, dans l'exemple décrit ici, le dispositif de contrôle pourra non seulement assurer une création et une gestion des première, deuxième et troisième configurations décrites plus haut, mais également, en étudiant un enchaînement séquentiel desdites configurations, observer que l'émetteur/récepteur mobile tend à se déplacer le long d'une diagonale définie par les positions des stations de base 11, 12, 16 et 27, et en déduire que la prochaine station de base active devrait être la station 27. Dans une quatrième configuration ultérieure et non-représentée ici, le dispositif de contrôle pourra, après avoir identifié les branches de communication secondaires le liant aux stations 19, 24 et 27 comme les plus anciennes, choisir de supprimer les branches de communication secondaires correspondant aux stations 19 et 24 en tant qu'étant les moins susceptibles de se voir transformées en branches de communication principales, puisque situées en dehors de la trajectoire prédite par le dispositif de contrôle. Dans une telle quatrième configuration, la macro-cellule résultante serait alors uniquement constituée de la station de base active 16 et des station de base voisines 12 et 27.

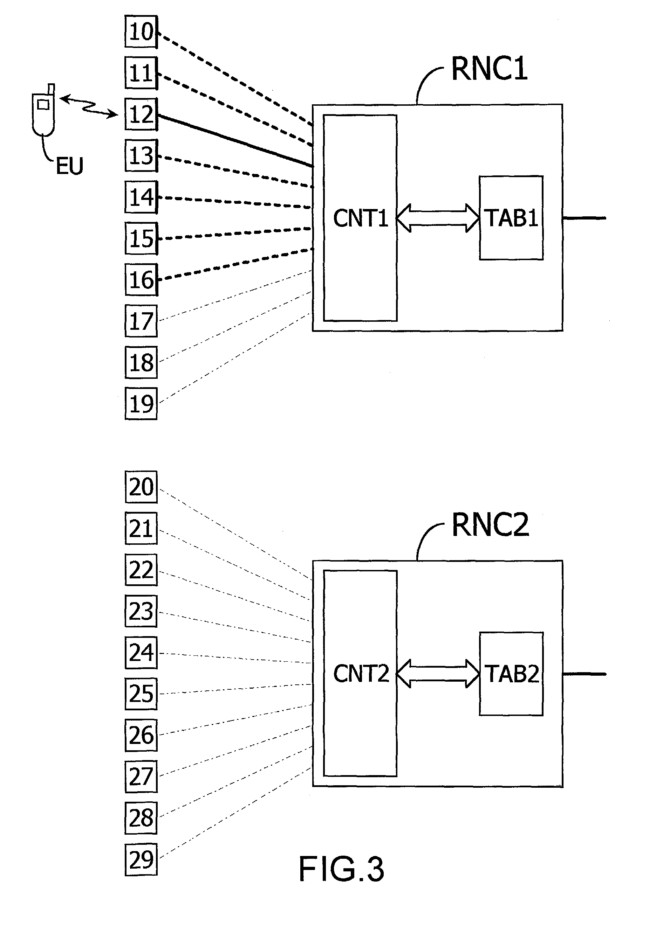

La Fig.3 représente des liaisons établies, dans la première configuration, entre un premier et un deuxième groupe de stations de base 10, 11... 19 et 20, 21...29 respectivement destinées à être pilotées par des premier et deuxièmes dispositif de contrôle RNC1 et RNC2, ce qui est illustré par des traits mixtes fins sur la présente figure. Dans cette première configuration, un émetteur/récepteur mobile EU est en communication avec la station de base 12 qui est alors la station de base active et est à ce titre reliée au dispositif de contrôle RNC1 par une branche de communication principale, représentée par un trait continu gras sur la présente figure.

Chaque dispositif de contrôle RNCi (pour i=1 ou 2) inclut un module de contrôle CNTi et une table de macro-cellules TABi, destinée à contenir, pour chaque station de base pilotée par ledit dispositif RNCi, une liste des stations de base qui devront être associées à la station de base considérée lorsque ladite station de base sera active afin de former une macro-cellule. Le contenu de la table de macro-cellules permet alors d'établir un lien de connexité entre la branche de communication principale et les branches de communication secondaires.

Ainsi, une table de macro-cellules TABi contiendra par exemple des lignes, adressées par un numéro i0, i1...i9 (pour i=1 ou 2 dans l'exemple décrit ici) de station de base destinée à être pilotée par le dispositif de contrôle RNCi, chaque ligne contenant une liste des numéros des stations de base avec lesquelles des branches de communication secondaires doivent être établies lorsque la station de base ayant pour identifiant l'adresse de la ligne considérée est active. La table de macro-cellules TAB1 contiendra par exemple une ligne d'adresse 12, dont le contenu sera [10, 11, 13, 14, 15, 16]. Dans cette première configuration, le module de contrôle, ayant établi la branche de communication principale entre le dispositif de contrôle RNC1 et la station de base active 12, interrogera la ligne 12 de la table TAB1 et en extraira ainsi les identifiants des stations de base avec lesquelles il doit établir des branches de communication secondaires, représentées par des traits pointillés gras sur la présente figure.

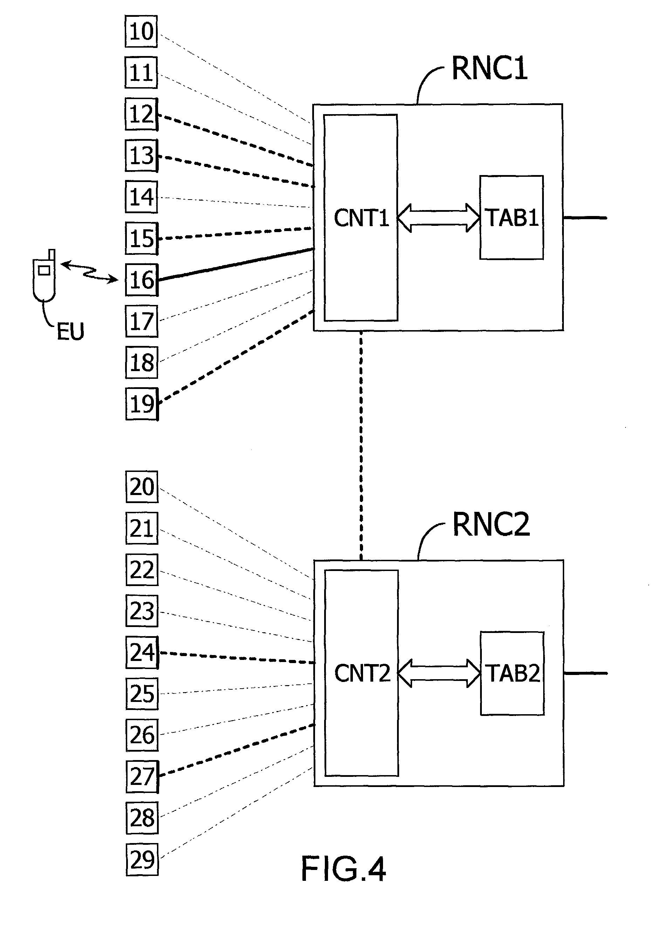

La Fig.4 représente des liaisons établies, dans la deuxième configuration, entre les premier et deuxième groupes de stations de base 10, 11...19 et 20, 21...29, respectivement et les premier et deuxièmes dispositif de contrôle RNC1 et RNC2. Dans cette deuxième configuration, l'émetteur/récepteur mobile EU est en communication avec la station de base 16 qui est alors la station de base active et est à ce titre reliée au dispositif de contrôle RNC1 par une branche de communication principale, représentée par un trait continu gras sur la présente figure. La table TAB1 contiendra par exemple une ligne d'adresse 16, dont le contenu sera [12, 13, 15, 19, 24, 27]. Dans cette deuxième configuration, le module de contrôle, ayant établi la branche de communication principale entre le dispositif de contrôle RNC1 et la station de base active 16, interrogera la ligne 16 de la table TAB1 et en extraira ainsi les identifiants des stations de base avec lesquelles il doit établir des branches de communication secondaires, représentées par des traits pointillés gras sur la présente figure. II apparaît que les stations de base 24 et 27 ne sont pas destinées à être pilotées par le dispositif de contrôle actif formé par le premier dispositif de contrôle RNC1, mais par le deuxième dispositif de contrôle RNC2. Dans cette configuration, une branche de communication secondaire supplémentaire est établie entre les premier et deuxième dispositifs de contrôle RNC1 et RNC2, de manière à créer une liaison entre le dispositif de contrôle actif RNC1 destiné à piloter la station de base 16 qui est la station de base active dans cette deuxième configuration et toutes les stations de base voisines de ladite station, dont les stations 24 et 27.

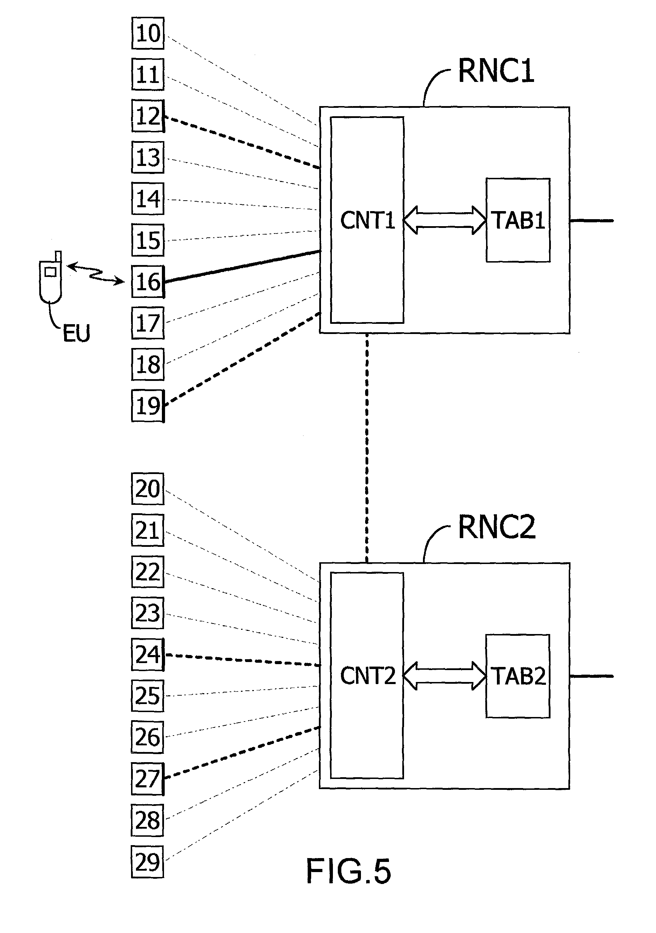

La Fig.5 représente des liaisons existant, dans la troisième configuration, entre les premier et deuxième groupes de stations de base 10, 11... 19 et 20, 21...29, respectivement et les premier et deuxièmes dispositif de contrôle RNC1 et RNC2. Dans cette troisième configuration, l'émetteur/récepteur mobile EU est toujours en communication avec la station de base 16 qui est toujours la station de base active et est à ce titre reliée au dispositif de contrôle RNC1 par une branche de communication principale, représentée par un trait continu gras sur la présente figure.

L'invention, en rendant possible une mesure des durées d'existence des branches de communication secondaires liant les stations de base 12, 13, 15, 19, 24, 27 voisines de la station de base active 16 au dispositif de contrôle RNC1 de ladite station active 16, a permis de déterminer que les branches secondaires attribuées aux stations 13 et 15 et établies initialement pour réaliser la macro-cellule dans la première configuration du système, sont restées inutilisées depuis.

Le dispositif de contrôle RNC1 aura alors supprimé les branches de communication secondaires ainsi identifiées, de sorte que les stations de base 13 et 15 correspondantes sont devenues disponibles pour entretenir d'autres communications avec d'autres émetteurs/récepteurs mobiles via de nouvelles branches de communication principales, ou pour établir de nouvelles branches de communication secondaires au sein d'autres macro-cellules incluant de tels autres émetteurs/récepteurs mobiles.

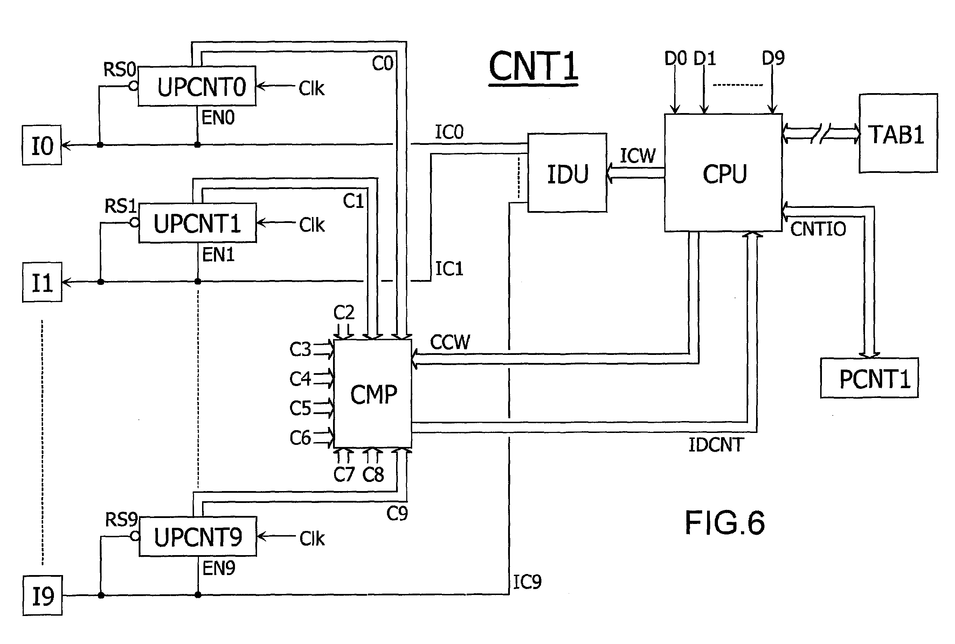

La Fig.6 représente schématiquement un mode de réalisation particulier d'un module de contrôle CNT1 inclus dans le premier dispositif de contrôle. Ce module de contrôle inclut une unité de traitement CPU destinée à recevoir des données D0, D1...D9 depuis les stations de base 10, 11... 19 pilotées par le premier dispositif de contrôle RNC1, lesquelles données pourront être entre autres représentatives d'une qualité de liaison observée entre la station de base correspondante et un émetteur/récepteur mobile donné, et permettront à l'unité de traitement CPU de déterminer une position et/ou une trajectoire dudit émetteur/récepteur mobile. L'unité de traitement CPU générera alors un mot de contrôle d'interface ICW à destination d'une unité de pilotage d'interface IDU, lequel mot de contrôle d'interface ICW définissant par son contenu les stations de base avec lesquelles il convient d'établir des branches de communication principale et secondaires en fonction des données D0, D1...D9 reçues depuis les stations de base, d'une part, et des données extraites par le module de contrôle CNT1 de la table de macro-cellules TAB1, d'autre part. Le dispositif de contrôle CNT1 inclut en outre des dispositifs d'interface I0, I1... I9 destinés à réaliser effectivement l'établissement et la suppression des branches de communication entre le premier dispositif d'interface et les stations de base que ledit dispositif est destiné à piloter. Le module de contrôle CNT1 inclut des moyens de mesure d'une durée d'existence de chaque branche de communication secondaire, matérialisés, dans cet exemple de réalisation, par des compteurs UPCNTj (pour j=0 à 9), cadencés par un signal d'horloge commun Clk, chaque compteur UPCNTj étant associé à un dispositif d'interface Ij et présentant une entrée d'autorisation de comptage ENj et une entrée de remise à zéro RSj. Un dispositif d'interface Ij sera actionné par un état actif d'un signal ICj provenant du module de pilotage d'interface IDU, et établira et maintiendra une branche de communication entre la station de base Ij et le dispositif de contrôle CNT1 tant que ledit signal ICj restera à l'état actif, par exemple au niveau logique haut. Tant que cette condition sera vérifiée, le contenu dudit compteur UPCNTj sera incrémenté à chaque front actif du signal d'horloge Clk, par exemple à chaque front montant dudit signal. Lorsque l'unité de traitement CPU établira que la branche de communication liant le dispositif de contrôle avec la station de base Ij (pour j=0 à 9) devra être supprimée, il modifiera la valeur du mot de contrôle d'interface ICW destiné à l'unité de pilotage d'interface IDU qui provoquera un retour à l'état inactif, par exemple au niveau logique bas, du signal ICj, avec pour double effet de provoquer la désactivation du dispositif d'interface Ij et une remise à zéro du compteur UPCNTj, lequel restera initialisé à zéro jusqu'à ce qu'une nouvelle branche de communication soit établie par le dispositif d'interface Ij sur ordre du module de pilotage d'interface IDU, matérialisé par un nouvel état actif du signal ICj.

Le dispositif de contrôle inclut en outre des moyens de comparaison CMP du contenu Cj des compteurs UPCNTj (pour j=0 à 9). Dans ce mode de réalisation particulier de l'invention, ces moyens de comparaison CMP sont programmables par un mot de contrôle de comparaison CCW provenant de l'unité de traitement CPU. La valeur de ce mot de contrôle de comparaison CCW indiquera si les moyens de comparaison CMP doivent fonctionner selon une première ou une deuxième variantes de l'invention, selon lesquelles, respectivement, le contenu Cj de chacun des compteurs UPCNTj (pour j=1 à 9) doit être comparé à une valeur de référence, ou si ces contenus Cj doivent tous être comparés entre eux afin d'en identifier les N plus grandes valeurs. Pour faire exécuter la première variante, l'unité de traitement CPU pourra attribuer au premier bit du mot de contrôle de comparaison CCW une première valeur, par exemple une valeur "0", les bits suivants déterminant la valeur de référence, alors que pour faire exécuter la deuxième variante, l'unité de traitement CPU attribuera au mot de contrôle de comparaison CCW une deuxième valeur, par exemple une valeur "1", les bits suivants déterminant la valeur de N en fonction du nombre de branches secondaires à libérer déduit par l'unité de traitement CPU sur la base des données D0, D1...D9 reçues depuis les stations de base pilotées par le premier dispositif de contrôle.

Les moyens de comparaison CMP identifieront alors en retour, au moyen d'un signal d'identification IDCNT destiné à l'unité de traitement CPU, les plus anciennes branches de communication, lesquelles pourront alors être supprimées à l'instigation de ladite unité de traitement CPU au moyen d'une modification adéquate du contenu du mot de contrôle d'interface ICW destiné à l'unité de pilotage d'interface IDU. Les branches de communication secondaires ainsi libérées seront alors disponibles pour établir d'autres communications avec d'autres émetteurs/récepteurs mobiles via de nouvelles branches de communication principales, ou pour établir de nouvelles branches de communication secondaires au sein d'autres macro-cellules incluant de tels autres émetteurs/récepteurs mobiles.

Le compteur associé à la branche de communication principale, qui est en principe une branche de communication secondaire d'une ancienne macro-cellule, au travers de laquelle les données sont effectivement transmises dans la configuration de la nouvelle macro-cellule, risque de présenter une valeur importante et de provoquer la sélection de la branche principale aux fins de suppression. Pour éviter ceci, plusieurs solutions sont possibles : on pourra par exemple prévoir que, lorsqu'une branche secondaire est transformée en branche principale, une remise à zéro de son compteur est systématiquement opérée par application par l'unité de traitement CPU ou par l'unité de pilotage d'interface IDU d'un signal non-représenté sur la figure sur l'entrée de remise à zéro RS dudit compteur. On pourra alternativement prévoir un dispositif de discrimination au sein de l'unité de traitement CPU, qui, connaissant à tout instant l'identifiant de la station de base active, sera capable de l'éliminer d'une liste d'identifiants des stations de base à supprimer de la macro-cellule courante, laquelle liste sera déduite par l'unité de traitement CPU sur la base du contenu du signal d'identification IDCNT fourni par les moyens de comparaison CMP.

Dans le mode de réalisation particulier décrit ici, le module de contrôle CNT1 inclus en outre un port PCNT1, via lequel ledit module de contrôle CNT1 est apte à échanger des informations CNTIO avec d'autres modules de contrôle inclus dans d'autres dispositifs de contrôle. En particulier, l'unité de traitement CPU pourra indiquer via ce port PCNT1 auxdits autres dispositifs de contrôle qu'ils doivent établir, maintenir en vigueur ou supprimer des branches de communication secondaires qui les relient à des stations de base appartenant à des macro-cellules pour lesquelles la station de base active appartient au groupe de stations de base piloté par le dispositif de contrôle incluant le module de contrôle CNT1. Ce port PCNT1 permettra également de communiquer à un autre dispositif de contrôle des données relatives à la durée d'existence d'une branche de communication secondaire reliant une station de base au dispositif de contrôle incluant le module de contrôle CNT1 lorsque la station de base active appartient au groupe de stations de base piloté par cet autre dispositif de contrôle.

Il est à noter que, bien que cela ne ressorte pas de manière explicite des explications précédentes, qui ne mentionnent qu'une seule branche de communication entre une station de base et son dispositif de contrôle afin de permettre une meilleure compréhension du principe de l'invention, chaque station de base pourra en réalité entretenir de multiples communications avec un même dispositif de contrôle au moyen de multiples branches de communication, principales ou secondaires, dont l'invention permet une gestion optimale en autorisant une surveillance de leurs longévités. A chacune de ces branches de communication pourra par exemple être associé le contenu d'un compteur destiné à être incrémenté tant que la branche de communication est active, conformément au mode de réalisation de l'invention décrit ci-dessus.

## Revendications

1. Procédé de transmission de données entre au moins un émetteur/récepteur mobile et un réseau de communication incluant une pluralité de stations de base pilotées par au moins un dispositif de contrôle, une station de base avec laquelle l'émetteur/récepteur mobile est en communication à un instant donné étant dite active et reliée au dispositif de contrôle par une branche de communication dite principale, et associée à au moins une station de base voisine de ladite station active au moyen d'au moins une branche de communication secondaire, connexe à la branche de communication principale et destinée à relier ladite station voisine au dispositif de contrôle, de façon à former une macro-cellule munie d'une zone de couverture incluant l'émetteur/récepteur mobile et d'une position apte à varier avec la position dudit émetteur/récepteur mobile,
procédé **caractérisé en ce qu'**il inclut une étape de mesure d'une durée d'existence de chaque branche de communication secondaire.

2. Procédé de transmission de données selon la revendication 1, incluant en outre une étape de comparaison de la durée d'existence de chaque branche de communication secondaire avec au moins une durée prédéterminée, et une étape de suppression de chaque branche de communication secondaire dont la durée d'existence est supérieure à ladite durée prédéterminée.

3. Procédé de transmission de données selon la revendication 1, incluant en outre une étape de comparaison entre elles des durées d'existence des branches de communication secondaires, mise en oeuvre en présence d'une pluralité de telles branches, et une étape de suppression d'un nombre N des branches de communication secondaires qui présentent les plus longues durées d'existence.

4. Procédé de transmission de données selon la revendication 3, **caractérisé en ce que** le nombre N est égal à un nombre de nouvelles branches de communication qui doivent être établies et qui impliquent des stations de base appartenant à la macro-cellule considérée.

5. Procédé de transmission de données selon l'une des revendications 1 à 4, **caractérisé en ce que** tout établissement d'une branche de communication secondaire est en outre subordonné à la réalisation préalable d'une condition par un utilisateur de l'émetteur/récepteur mobile.

6. Procédé de transmission de données selon l'une des revendications 1 à 5, **caractérisé en ce que** toute opération d'établissement ou de suppression d'une branche de communication principale ou secondaire est exécutée à l'instigation du dispositif de contrôle.

7. Procédé de transmission de données selon l'une des revendications 1 à 6, selon lequel les opérations d'établissement ou de suppression des branches de communication principales et/ou secondaires sont déclenchées en fonction d'informations relatives au déplacement de l'émetteur/récepteur mobile fournies au dispositif de contrôle par au moins une station de base de la macro-cellule.

8. Procédé de transmission de données selon l'une des revendications 1 à 7, selon lequel, le réseau de communication incluant une pluralité de dispositifs de contrôle, chacun destiné à piloter un groupe prédéterminé de stations de base, la branche de communication principale est établie entre la station de base active et un dispositif de contrôle actif destiné à piloter le groupe de stations de base auquel appartient ladite station de base active, des stations de base qui seraient associées à la station de base active et qui seraient pilotées par d'autres dispositifs de contrôle étant alors reliées par des branches de communication secondaires auxdits dispositifs, eux-mêmes reliés au dispositif de contrôle actif par d'autres branches de communication secondaires.

9. Procédé de transmission de données selon l'une des revendications 1 à 8, incluant une étape d'interrogation par le dispositif de contrôle pilotant la station de base active d'une table de macro-cellules préalablement mémorisée, destinée à contenir, pour chaque station de base pilotée par ledit dispositif, une liste des stations de base qui devront être associées à la station de base considérée lorsque ladite station de base sera active afin de former une macro-cellule.

10. Système de télécommunication comprenant au moins un émetteur/récepteur mobile et un réseau de communication incluant une pluralité de stations de base pilotées par au moins un dispositif de contrôle, une station de base avec laquelle l'émetteur/récepteur mobile est en communication à un instant donné étant dite active et reliée au dispositif de contrôle par une branche de communication dite principale, et associée à au moins une station de base voisine de ladite station active au moyen d'au moins une branche de communication secondaire, connexe à la branche de communication principale et destinée à relier ladite station voisine au dispositif de contrôle, de façon à former une macro-cellule munie d'une zone de couverture incluant l'émetteur/récepteur mobile et d'une position apte à varier avec la position dudit émetteur/récepteur mobile,
système dans lequel le dispositif de contrôle est muni de moyens de mesure d'une durée d'existence de chaque branche de communication secondaire.

11. Système de télécommunication selon la revendication 10, incluant en outre des moyens de comparaison de la durée d'existence de chaque branche de communication secondaire avec au moins une durée prédéterminée, les moyens de comparaison étant destinés à déclencher une suppression de chaque branche de communication secondaire dont la durée d'existence est supérieure à ladite durée prédéterminée.

12. Système de télécommunication selon la revendication 10, incluant en outre des moyens de comparaison entre elles des durées d'existence des branches de communication secondaires, destinés à n'être activés qu'en présence d'une pluralité de telles branches, et à déclencher une suppression d'un nombre N des branches de communication secondaires qui présentent les plus longues durées d'existence.
